# EUROPEAN PATENT APPLICATION

(11) **EP 1 698 674 A1**
(43) Date of publication of application: **06.09.2006**
(21) Application number: 06110037.6
(22) Date of filing: 16.02.2006
(51) Int. Cl.: C09D 11/00

(54) **Shear Stable Latex Particles**

(30) Priority: 01.03.2005 US 69518
(71) Applicant: Hewlett-Packard Development Company, L.P., Houston, TX 77070 (US)
(72) Inventor: Ganapathiappan, Sivapackia, Palo Alto, CA 94304-1100 (US)
(74) Representative: Durville, Guillaume

(57) **Abstract**

The present invention relates generally to ink-jet printing with latex polymer containing inks. A shear stable latex particle including a hydrophobic monomer cross-linked with an acid bearing monomer, and a process for producing the latex particle are disclosed. Methods of forming an ink-jet ink having the shear stable latex particles and ink-jet inks resulting therefrom are also disclosed.

## Description

### TECHNICAL FIELD

The present invention relates generally to ink-jet printing with latex-polymer containing inks. More particularly, the present invention relates to ink-jet inks having shear stable latex polymers.

### BACKGROUND OF THE INVENTION

The majority of commercial ink-jet inks are water-based. Thus, their constituents are generally water-soluble (e.g., dyes) or water dispersible (e.g., pigments). Furthermore, ink-jet inks have low viscosity (typically 5 cps or less).

In addition to typical color fade issues that occur in many ink-jet ink systems, ink-jet prints can also exhibit poor durability when exposed to water or high humidity. This results from the use of water-soluble and water dispersible colorants within the water-based ink. In response to this problem, latex polymers that are compatible with ink-jet inks have been incorporated into the inks in an attempt to improve durability properties of ink such as waterfastness, light-fastness, smear-fastness and wet-smudge fastness. The latex can consist of submicron hydrophobic polymeric particles of high molecular weight that are dispersed in the aqueous ink-jet ink as an emulsion. When printed as part of an ink-jet ink and upon evaporation or adsorption of the water in the ink, a latex component of the ink can form a hydrophobic print film on a media surface, entrapping and protecting the colorant within the hydrophobic print film.

Various latex particles are known in the art. For instance, one such latex particle includes a reactive surfactant covalently bonded to the latex particle surface. Another latex particle is formed using a seed polymerization process to produce a latex particle having a core of one or more layers, and encapsulating the core with a shell polymer.

However, such latex compositions may create pen reliability problems. Inks containing a latex component typically show a decrease in drop velocity as the drop ejection frequency of the ink-jet pen is increased beyond a certain value. The velocity reduction negatively impacts drop placement accuracy on the printed media within a moderate frequency range. At higher frequencies, the velocity reduction prevents drop ejection altogether, which can lead to agglomeration of the ink on the printer nozzle. For instance, the conventional latex polymers undergo severe thermal stress before they are ejected out of the nozzle of the thermal inkjet ink pen and most of these latex polymers are not shear-stable under these circumstances. Thus, the nozzles may become blocked leading to poor printability and a shorter lifetime for the nozzle.

In view of the foregoing, there remains a need in the art for latex particles that are thermal shear stable, and for inks that can be used in high speed ink-jet printers that exhibit good drop placement accuracy on the print media and stable drop ejection at high drop frequencies.

### BRIEF SUMMARY OF THE INVENTION

In one embodiment, a latex particle having a hydrophobic monomer cross-linked with an acid bearing monomer within the latex particle is disclosed. The latex particle is shear stable as determined by a shear test comprising measuring a size of the latex particle, shearing the latex particle, and measuring the size of the latex particle after shearing.

In another embodiment, a method of producing a latex particle includes mixing a hydrophobic monomer and an acid bearing monomer with a cross-linking agent to form a monomer mixture and shearing the monomer mixture with water and a surfactant to form an emulsion. The emulsion is placed in contact with a polymerization initiator to cross-link the hydrophobic monomer with the acid bearing monomer and form the latex particles. The latex particles are then filtered.

In a further embodiment, a method of forming an ink-jet composition comprises making and filtering the latex particles, and then admixing the same with an ink vehicle having a colorant.

In another embodiment, an ink-jet ink includes an aqueous ink vehicle and colorant admixed in the ink vehicle. The ink-jet ink further includes latex particles dispersed in the ink vehicle, wherein the latex particles are shear stable as determined by a shear test comprising measuring a size of the latex particle, shearing the latex particle, and measuring the size of the latex particle after shearing.

### DETAILED DESCRIPTION OF THE INVENTION

In each of the various embodiments, the present invention is directed to latex particles, ink-jet inks including the latex particles, and methods for the production thereof. Further, the present invention relates to latex particles having shear stability obtained by cross-linking polymeric particles within the latex particle, and further relates to ink-jet inks having such latex particles therein.

As used herein, "liquid vehicle" or "ink vehicle" will refer to the fluid in which colorants, latex particles, and/or colloids are dispersed to form ink- jet inks. Suitable liquid vehicles and vehicle components include, but are not limited to a variety of different agents, such as surfactants, co-solvents, buffers, biocides, sequestering agents, humectants, viscosity modifiers and water. Other compounds that may serve as or be employed in the ink vehicle include, but are not limited to, organic solvents, surface-active agents, metal chelators, and any combinations thereof. As would be apparent to one of skill in the art, the relative amounts of ink vehicle and the various constituents described herein may be varied to accommodate the specific pen architecture of the ink-jet printer.

In one embodiment, water may make up a substantially large percentage of the overall ink vehicle or ink composition of the present invention. For instance, the water may comprise purified or deionized water in an amount of from about 51 to about 95 percent by weight of the ink composition.

In another embodiment, a co-solvent may be included in the ink composition. Classes of co-solvents that may be used include aliphatic alcohols, aromatic alcohols, diols, glycol ethers, polyglycol ethers, caprolactams, formamides, acetamides, long chain alcohols and any combinations thereof. Examples of such compounds include primary aliphatic alcohols, secondary aliphatic alcohols, 1,2-alcohols, 1,3-alcohols, 1,5-alcohols, ethylene glycol alkyl ethers, propylene glycol alkyl ethers, higher homologs of polyethylene glycol alkyl ethers, N-alkyl caprolactams, unsubstituted caprolactams, both substituted and unsubstituted formamides, both substituted and unsubstituted acetamides, trimethylolpropane, 2-pyrrolidinone, and 1,5-pentanediol.

In a further embodiment, the surfactant component of the ink composition may be added in amount up to about 10% by weight of the ink composition. The surfactant may be present in an amount of from about 0.01% to about 4%. In other embodiments, the surfactant may be present in an amount of about 2.25% by weight of the ink composition. Such amounts may be achieved using a single surfactant ingredient or a mixture of surfactants.

Generally, the surfactants may be used to increase the dispersion stability of the colorants and/or the latex particle, and to increase the penetration of the ink into the print medium. A wide array of surfactant classes may be used, including, but not limited to, cationic, anionic, zwitterionic or nonionic surfactants. Non-limiting examples of surfactants include alkyl polyethylene oxides, alkyl phenyl polyethylene oxides, polyethylene oxide block copolymers, acetylenic polyethylene oxides, polyethylene oxide (di)esters, polyethylene oxide amines, protonated polyethylene oxide amines, protonated polyethylene oxide amides, dimethicone copolyols, substituted amine oxides, Nonylphenol Ethoxylates (e.g., "Rhodafac"), sodium dodecylsulfate, Triton N and X-series, and any combinations thereof.

In another embodiment, the ink composition may include up to about 5% by weight of a biocide, fungicide or other antimicrobial agent capable of inhibiting the growth of microorganisms. The biocides may include, without limitation, NUOSEPT 95, available from Hals America (Piscataway, N.J.); PROXEL GXL, available from Zeneca (Wilmington, Del.), glutaraldehyde, available from Union Carbide Company (Bound Brook, N.J.) under the trade designation UCARCIDE 250, Vancide, available from (R.T. Vanderbilt Co.) and combinations thereof.

In yet another embodiment, the ink composition may include a buffer agent. The buffer agent may be present in an amount up to about 5% by weight of the ink composition. The buffer agents in the ink composition may be used to modulate pH. The buffer may be an organic-based biological buffer or an inorganic buffer. Non-limiting examples of buffers that may be used include Trizma base, available from Aldrich Chemical (Milwaukee, Wis.), 4-morpholineethanesulfonic acid (MES), 4-morpholinepropane sulfonic acid (MOPS), and any combinations thereof.

In another embodiment, the ink composition may include sequestering agents. One example of a sequestering agent is a metal chelating agent present in the ink composition up to an amount of about 2% by weight. Metal chelating agents may be used to bind transition metal cations that may be present in the ink composition. Non-limiting examples of metal-chelating agents include Ethylenediaminetetra acetic acid (EDTA), Diethylenetriaminepentaacetic acid (DTPA), trans-1,2-diaminocyclohexanetetraacetic acid (CDTA), (ethylenedioxy) diethylenedinitrilotetraacetic acid (EGTA), other chelators that bind transition metal cations, and any combinations thereof.

As used herein, "colorant" may include dyes, pigments and/or other particles that are compatible with and that may be suspended in an ink vehicle having the latex of the instant invention. Pigments that may be used include, but are not limited to, self-dispersed pigments and polymer-dispersed pigments. Self-dispersed pigments may include those that have been chemically surface modified with a charge or a polymeric grouping, which can aid the pigment in becoming and/or substantially remaining dispersed in a liquid vehicle. The pigment may also be a self dispersed or polymer-dispersed pigment that utilizes a dispersant (which may be a polymer, an oligomer or a surfactant) in the liquid vehicle and/or in the pigment that utilizes a physical coating to aid the pigment in becoming and/or substantially remaining dispersed in a liquid vehicle. With respect to the other colorant particles that may be used, examples include magnetic particles, aluminas, silicas, and/or other ceramics, metallics, or organo-metallics, whether or not such particles impart color. The colorant may be present in an amount of from about 0.1 % to 10% by weight.

As used herein, "effective amount" refers to at least the minimal amount of a substance or agent, which is sufficient to achieve a desired effect. Amount, concentrations, and other numerical data may be expressed or presented herein in a range format. It is to be understood that such a range format is used for convenience and, thus, should be interpreted in a flexible manner to include not only numerical values associated with the limits of the range, but also to include all the individual numerical values or sub-ranges encompassed within that range as if each numerical value and sub-range is explicitly stated.

As used herein, the term "shear stability" will be used to refer to the latex particles' ability to maintain their original size and/or shape under mechanical and/or thermal stress. Shear stability may be measured by subjecting the particles to mechanical and/or thermal stress and determining the change in particle size and/or shape.

The latex particles of the present invention improve the shear stability of latex dispersions by lightly cross-linking the polymeric particles within the latex particle. The light cross-linking does not appreciably affect the physical properties of the polymers. The latex particles may be incorporated into ink-jet inks and comprise an emulsion polymerization product of a blend of monomers that collectively provide dispersion and thermal-shear stability in an ink-jet pen while maintaining good room-temperature, film-forming properties when printed. Unlike conventional latex polymers, such as polymers prepared with hydrophobic monomers along with acrylic acid, methacrylic acid, vinylbenzoic acid or mono-methacryloyloxyethyl succinate, that shear or deform under severe thermal stress, the light cross-linking of the latex particles with dimers or multifunctional polymerizable vinylic compounds disclosed herein improves the shear stability of the latex particles.

In one embodiment, an ink-jet ink comprises effective amounts of an ink vehicle, a colorant admixed in the ink vehicle, and latex particles dispersed in the ink vehicle. In one particular embodiment, the latex particles may be shear stable as determined by a shear test and, in another embodiment, polymers in the latex particles are lightly cross-linked.

In another embodiment, an ink-jet ink comprises effective amounts of an ink vehicle, a colorant admixed in the ink vehicle and latex particles dispersed in the ink vehicle. The latex particles are shear stable as determined by a shear test and may include polymers in the latex particles that are lightly cross-linked.

In yet another embodiment, an ink-jet ink may comprise effective amounts of an ink vehicle having a liquid density, a colorant admixed in the ink vehicle and latex particles dispersed in the ink vehicle. The latex particles are produced in the presence of a cross-linking agent and have shear stability as determined by a shear test.

Latex particles may be produced by lightly cross-linking polymerizable, hydrophobic monomers with acid bearing monomers including, but not limited to, acrylic acid, methacrylic acid, vinylbenzoic acid, mono-methacryloyloxyethyl succinate, and any combination thereof to produce latex particles having a size of about 50 nm to 400 nm. The cross-linking may be carried out by the addition of monomers with polymerizable di- or multifunctional ethylenically unsaturated groups.

In one embodiment, the polymerizable acid monomers are cross-linked with a cross-linking agent such as, for example, ethylene glycol dimethacrylate, pentaerythritol tetraacrylate, pentaerythritol triacrylate, 3-(acryloyloxy)-2-hydroxypropyl methacrylate, ethyleneglycol dimethacrylamide, mono-2-(methacryloyloxyethyl) maleate, divinyl benzene, other monomers having polymerizable di- or polyfunctional groups, or any combination thereof. The cross-linking agent may be used in a range of 0.01%-20% by weight of a total composition. To form the latex polymers, the monomers are polymerized in the presence of a polymerization initiator.

In other embodiments, non-limiting examples of other cross-linkers include: ethylene glycol dimethacrylate, propylene glycol dimethacrylate, di(ethylene glycol) dimethacrylate, tri(ethylene glycol) dimethacrylate, tetra(ethylene glycol) dimethacrylate, pentaerythritol trimethacrylate, pentaerythritol tetramethacrylate, polyethylene glycol dimethacrylate of a molecular weight in the range of 250 to 2000, 1,3-butanediol dimethacrylate, 1,4-butanediol dimethacrylate, 1,6-hexanediol dimethacrylate, glycerol dimethacrylate, diurethane dimethacrylate, Bisphenol A dimethacrylate, Bisphenol A ethoxylate dimethacrylate, neopentyl glycol dimethacrylate, 1,3-bis(3-methacryloyloxypropyl)-1,1,3,3,-tetramethyldiloxane, trimethylolpropane, trimethacrylate, di(trimethylolpropane)tetramethacrylate and tricyclo[5.2.1.0(2,6)]decanedimethanol dimethacrylate. In the above-listed compounds, the methacrylate group may be changed to the corresponding acrylate groups.

In yet additional embodiments, other examples of cross-linkers include diallyl ether, di(ethylene glycol) divinyl ether, tri(ethylene glycol) divinyl ether, tetra(ethylene glycol) divinyl ether, poly(ethylene glycol) divinyl ether, trimethylolpropane diallyl ether, divinylbenzene, diallybenzene, trimethylolpropane benzoate diacrylate, trimethylolpropane propoxylate triacrylate, pentaerythritol diacrylate monostearate, pentaerythritol propoxylate triacrylate, pentaerythritol triallyl ether, di(propylene glycol) allyl ether methacrylate, 1,4-bis(acryloyl)piperazine, N,N'-ethylenebisacrylamide, N,N'-methylenebisacrylamide and N,N'-(1,2-dihydroxyethylene)bisacrylamide and ethidium bromide-N,N'-bismethacrylamide.

The amount of such cross-linkers in the latex particle is from about 0.01 to about 20% by weight of the particle. In one embodiment, the cross-linker is present in a range of about 0.5 to about 2%, and in another embodiment, the cross-linker is present in a range of about 0.8 to about 1.2%. In another embodiment, the cross-linker can also carry acid functional group so that additional stability to the particle is achieved. An example for such cross-linker is mono-2-(methacryloyloxyethyl) maleate.

In another embodiment, the cross-linking agent is about 1% by weight (i.e., the final product includes 1% cross-linker by weight with respect to the latex polymer). The presence of 1% cross-linking agent is sufficient to enhance shear stability without unduly affecting the physical properties of the polymer. In an additional embodiment, polymers having a low glass transition temperature (e.g., less than 25ºC) may have a higher amount of the cross-linking agent (e.g., about 2% by weight). It will be apparent to those of ordinary skill in the art that routine experimentation may be used to determine what amount of cross-linking agent may be used to obtain the desired glass transition temperature.

The hydrophobic monomers may include, without limitation, methyl methacrylate, methyl acrylate, ethyl acrylate, ethyl methacrylate, butyl acrylate, butyl methacrylate, hexyl acrylate, hexyl methacrylate, ethylhexyl acrylate, ethylhexyl methacrylate, styrene, 4-methylstyrene, other known hydrophobic monomers and any combinations thereof.

The molecular weight of the latex polymer may be from about 5,000 to about 10 million. In one embodiment, the molecular weight is from about 15,000 to about 200,000, and in another embodiment the molecular weight is from about 20,000 to about 100,000. The molecular weight of the polymer may be controlled using a chain transfer agent such as, for example, isooctylthioglycolate.

In another embodiment, the methods used to polymerize the monomers to form the latex particles may be bulk, continuous or semi-continuous emulsion, microemulsion and miniemulsion polymerizations methods. Further, the polymerization initiators may include persulfates such as potassium persulfate, ammonium persulfate or redox type initiators, and monomer soluble polymerization initiators such as benzoyl peroxide, t-butyl peroxide and azobisisobutyronitrile may also be used.

### EXAMPLES

The following examples describe various embodiments of compositions, methods, and systems for printing ink-jet ink compositions on a media of porous or non-porous, paper, plastic or metal substrate with a pen of an ink-jet printer in accordance with the present invention. The examples are merely illustrative and are not meant to limit the scope of the present invention in any way.

### Example I

The hydrophobic monomers methyl methylacrylate (88.8 g) and hexyl acrylate (88.8 g), the acid bearing monomer mono-methacryloyloxyethyl succinate (20 g), the cross-linking agent ethylene glycol dimethacrylate (2.4 g), and isooctylthioglycolate (1.0 g) were mixed together to form a monomer mixture. Water (67.7 g) and 30% of the anionic surfactant Rhodafac RS 710 (16.67 g) were added to the monomer mixture and gently sheared (i.e., by mechanical stirring) to form an emulsion. 600 ml of water was heated to 90ºC. A polymerization initiator of 0.7% potassium persulfate solution (100 ml) was prepared and added dropwise to the heated water at a rate of 2 ml/minute. Simultaneously, the emulsion was added dropwise to the heated water over a period of about 40 minutes to form a latex. The emulsion/heated water mixture was maintained at a temperature of about 90ºC and allowed to cool down after one hour. When the temperature of the emulsion/heated water mixture reached less than about 55ºC, 20 g of 17.5% potassium hydroxide was added to adjust the pH of the emulsion/heated water mixture to a pH of greater than 7.0. The latex was filtered with a 200 mesh filter to obtain stable polymer particles having an average size of about 260 nm. The filtered, stable polymer particles were diluted with water to 4% by weight, heated to about 60ºC and subjected to a shear test.

### Example II

The hydrophobic monomers methyl methacrylate (88.8 g) and hexyl acrylate (88.8 g), the acid bearing monomer mono-methacryloyloxyethyl succinate (20 g), and isooctylthioglycolate (1.0 g) were mixed together to form a monomer mixture. Water (67.7 g) and 30% Rhodafac RS710 (16.67 g) were added to the monomer mixture and gently sheared (i.e., by mechanical stirring) to form an emulsion. 600 ml of water was heated to 90ºC. A 0.7% potassium persulfate solution (100 ml) was prepared and added dropwise to the heated water at a rate of 2 ml/minute. The emulsion was added to the heated water dropwise over a period of about 40 minutes to form latex. The emulsion/heated water mixture was maintained at 90ºC and allowed to cool down after one hour. When the temperature of the emulsion/heated water mixture reached less than 55ºC, 20 g of 17.5% potassium hydroxide was added to adjust the pH of the emulsion/heated water mixture to greater than 7.0. The latex was filtered with a 200 mesh filter to obtain stable polymer particles having an average size of about 260 nm. The filtered, stable polymer particles were diluted with water to 4% by weight, heated to 60º and subjected to a shear test.

In another embodiment, the latex polymer particles may be formulated to have a size of between about 50 nm and 400 nm. The size of the latex polymer particles may be controlled by varying the concentration of the anionic surfactant using routine experimentation known to those of ordinary skill in the relevant art.

### Example III

The diluted latex obtained from Examples I and II were blended at high-speed in a blender for 5 minutes and subjected to the shear test. The shear test includes blending (i.e. shearing) the diluted latex particles at high-speed in a blender for about 5 minutes. The size of the particles is measured before and after the blending of the shear test. Particles that do not have a substantial change in particle size or result in increased viscosity without any separation of settlement after the shear test are deemed to have passed the shear test. The results of the shear test of Example III are shown in Table 1.

Table 1: Shear test results for latex prepared in Examples I and II.

**Latex Particle Size**

| | | | |
|---|---|---|---|
| | Before Shear Test | After Shear Test | Test Result |
| Example I | 260 nm | 265 nm | Pass |
| Example II | 260 nm | 320 nm | Fail. |

Table 1 indicates that minor cross-linking of the latex particles in Example I has a significant and unexpected impact on the shear stability of the latex polymers. For instance, the latex particles of Example I passed the shear test while the latex particles of Example II did not pass the shear test, indicating that the presence of the cross-linking agent allowed the latex particles of Example I to exhibit shear stability.

### Example IV

The latex particles of Example I are formulated into an aqueous ink-jet ink formulation. The representative ink formulation generally includes about 4% latex by weight, about 3% self-dispersed pigment by weight, about 6% 2-pyrrolidinone by weight, about 4% 1,2 hexanediol by weight, about 3% LEG-1 by weight, about 5% glycerol by weight and about 2% of miscellaneous dispersants and humectants in water.

### Example V

The acid bearing monomer 3-vinylbenzoic acid (2.5 g) was dissolved in the hydrophobic monomer styrene (22.25 g) and the cross-linking agent divinylbenzene (0.25 g). This monomer mixture was emulsified in water (10 g) with 30% Rhodafac RS 710 (2.1 g). Meanwhile, water (90 ml) was heated to 90ºC in a reactor. The polymerization initiator potassium persulfate (0.1 g) was added to the hot water followed by the emulsion over a period of 5 min. The reaction temperature was maintained at 90ºC for another 2 h and cooled. The latex obtained was neutralized with 17.5% potassium hydroxide solution to a pH of 8.5. The latex was filtered through 200 mesh filter to obtain latex with particle size of about 172 nm.

### Example VI

Example V was repeated under identical conditions, but without the cross-linker divinylbenzene in the same scale.

### Example VII

The acid bearing monomer 3-vinylbenzoic acid (1.96 g) was dissolved in the hydrophobic monomer styrene (10.36 g) and the cross-linking agent divinylbenzene (0.28 g). This monomer mixture was emulsified in water (9.5 g) with 30% Rhodafac RS 710 (2.33 g). Meanwhile, water (92.4 ml) was heated to 90ºC in a reactor. The polymerization initiator potassium persulfate (0.09 g) was added to the hot water followed by the emulsion over a period of 7 min. The reaction temperature was maintained at 90ºC for another 2 h and cooled. The latex obtained was neutralized with 17.5% potassium hydroxide solution to a pH of 8.5. The latex was filtered through 200 mesh filter to obtain latex with particle size 173 nm.

### Example VIII

Example VII was repeated under identical conditions in the same scale in the absence of the cross-linker divinylbenzene.

### Example IX

The diluted latex obtained from Examples V through VIII were blended at high-speed in a blender for 5 minutes and subjected to the shear test. The shear test includes blending (i.e. shearing) the diluted latex particles at high-speed in a blender for about 5 minutes. The size of the particles is measured before and after the blending of the shear test. Particles that do not have a substantial change in particle size or result in increased viscosity without any separation of settlement after the shear test are deemed to have passed the shear test. The results of the shear test of Example IX are shown in Table 2.

Table 2: Shear test results for latex prepared in Examples V to VIII.

**Latex Particle Size**

| | | | |
|---|---|---|---|
| | Before Shear Test | After Shear Test | Test Result |
| Example V | 172 nm | 174 nm | Pass |
| Example VI | 178 nm | 240 nm | Fail |
| Example VII | 173 nm | 172 nm | Pass |
| Example VIII | 180 nm | 245 nm | Fail. |

### EXAMPLE X

The latex particles of Examples V and VII are formulated into an aqueous ink-jet ink formulation. The representative ink formulation generally includes about 4% latex by weight, about 3% self-dispersed pigment by weight, about 6% 2-pyrrolidinone by weight, about 4% 1,2 hexanediol by weight, about 3% LEG-1 by weight, about 5% glycerol by weight and about 2% of miscellaneous dispersants and humectants in water.

Although the present invention has been shown and described with respect to various exemplary embodiments, various additions, deletions, and modifications that are obvious to a person of ordinary skill in the art to which the invention pertains, even if not shown or specifically described herein, are deemed to lie within the scope of the invention as encompassed by the following claims. Further, features of elements of different embodiments may be employed in combination.

## Claims

1. A process for producing latex particles for use in an ink-jet ink composition, the process consisting essentially of:
mixing at least one hydrophobic monomer and an acid bearing monomer with a cross-linking agent to form a monomer mixture;
shearing the monomer mixture with water and a surfactant to form an emulsion;
placing the emulsion in contact with a polymerization initiator, thus cross-linking the at least one hydrophobic monomer with the acid bearing monomer to form latex particles; and
filtering the latex particles.

2. The process according to claim 1, further comprising admixing the filtered latex particles with an ink vehicle having a colorant admixed therein.

3. A product produced by the process according to claim 1 or 2.

4. The product of claim 3, wherein the latex particles are shear stable as determined by a shear test comprising measuring a size of the latex particle, shearing the latex particle, and measuring the size of the latex particle after shearing.

5. The method according to claim 1 or 2, or the product of claim 3 or 4, wherein the at least one hydrophobic monomer is selected from the group consisting of methyl methacrylate, methyl acrylate, ethyl acrylate, ethyl methacrylate, butyl acrylate, butyl methacrylate, hexyl acrylate, hexyl methacrylate, ethylhexyl acrylate, ethylhexyl methacrylate, styrene, 4-methylstyrene, and any combinations thereof.

6. The method according to claim 1 or 2, or the product of any one of claims 3-5, wherein the acid bearing monomer is selected from the group consisting of acrylic acid, methacrylic acid, vinylbenzoic acid, mono-methacroyloxyethyl succinate, and any combinations thereof.

7. The method according to claim 1 or 2, or the product of any one of claims 3-6, having a size of between about 50 nm and 400 nm.

8. The method according to claim 1 or 2, or the product of any one of claims 3-7, wherein the cross-linking agent is selected from the group consisting of ethylene glycol dimethacrylate, pentaerythritol tetraacrylate, pentaerythritol triacrylate, 3-(acryloyloxy)-2-hydroxypropyl methacrylate, ethyleneglycol dimethacrylamide, mono-2-(methacryloyloxyethyl) maleate, divinyl benzene, propylene glycol dimethacrylate, di(ethylene glycol) dimethacrylate, tri(ethylene glycol) dimethacrylate, tetra(ethylene glycol) dimethacrylate, pentaerythritol trimethacrylate, pentaerythritol tetramethacrylate, polyethylene glycol dimethacrylate of a molecular weight in the range of 250 to 2000, 1,3-butanediol dimethacrylate, 1,4-butanediol dimethacrylate, 1,6-hexanediol dimethacrylate, glycerol dimethacrylate, diurethane dimethacrylate, Bisphenol A dimethacrylate, Bisphenol A ethoxylate dimethacrylate, neopentyl glycol dimethacrylate, 1,3-bis(3-methacryloyloxypropyl)-1,1,3,3,-tetramethyldiloxane, trimethylolpropane, trimethacrylate, di(trimethylolpropane)tetramethacrylate, tricyclo[5.2.1.0(2,6)]decanedimethanol dimethacrylate, other monomers having polymerizable di- or polyfunctional groups, and any combination thereof.

9. The method according to claim 1 or 2, or the product of any one of claims 3-8, wherein the surfactant comprises an anionic surfactant.

10. The method according to claim 1 or 2, or the product of any one of claims 3-9, wherein the polymerization initiator comprises potassium persulfate.
